Europäisches Patentamt

European Patent Office

Office européen des brevets

(19)

(11) Veröffentlichungsnummer : **0 075 972**
**B1**

(12) **EUROPÄISCHE PATENTSCHRIFT**

(45) Veröffentlichungstag der Patentschrift :
13.03.85

(21) Anmeldenummer : 82201021.1

(22) Anmeldetag : 13.08.82

(51) Int. Cl.⁴ : **C 10 J  3/02, C 10 J  3/54,**
**C 10 J  3/08, C 10 J  3/16**

(54) Verfahren zum Vergasen fester Brennstoffe.

(30) Priorität : 25.09.81 DE 3138124

(43) Veröffentlichungstag der Anmeldung :
06.04.83 Patentblatt 83/14

(45) Bekanntmachung des Hinweises auf die Patenterteilung : 13.03.85 Patentblatt 85/11

(84) Benannte Vertragsstaaten :
DE GB

(56) Entgegenhaltungen :
EP-A- 0 008 469
WO-A-80 /009 74
FR-A- 2 295 116
US-A- 4 211 540
PATENTS ABSTRACTS OF JAPAN, Band 6, Nr.
143(C117)(1021), 3. August 1982

(73) Patentinhaber : METALLGESELLSCHAFT AG
Reuterweg 14 Postfach 3724
D-6000 Frankfurt/M.1 (DE)

(72) Erfinder : Rudolph, Paul
Friedrichsdorfer Strasse 17
D-6380 Bad Homburg (DE)
Erfinder : Reimert, Rainer, Dr.
Am Erbsengarten 4
D-6270 Idstein (DE)
Erfinder : Turna, Osman
Wolfsgangstrasse 4
D-6000 Frankfurt am Main (DE)

(74) Vertreter : Fischer, Ernst, Dr.
Reuterweg 14
D-6000 Frankfurt am Main 1 (DE)

EP 0 075 972 B1

# 0 075 972

**Beschreibung**

Die Erfindung betrifft ein Verfahren zum Vergasen fester Brennstoffe mit Sauerstoff, Wasserdampf und/oder Kohlendioxid enthaltenden Vergasungsmitteln, wobei man grobkörnige feste Brennstoffe mit Korngrößen von mindestens 2 mm unter einem Druck von 5 bis 150 bar im Festbett vergast, das sich langsam nach unten bewegt, in das die Vergasungsmittel von unten eingeleitet und unter dem die unverbrennlichen mineralischen Bestandteile als feste Asche oder flüssige Schlacke abgezogen werden, und wobei man feinkörnige feste Brennstoffe in der Wirbelschicht unter einem Druck von 1 bis 100 bar vergast.

Die Vergasung körniger Kohle im Festbett ist bekannt und z. B. in Ullmanns Enzyklopädie der technischen Chemie, 4. Auflage (1977), Band 14, Seiten 383-386, dargestellt. Einzelheiten des Vergasungsverfahrens mit festbleibender Asche sind den US-Patentschriften 3 540 867 und 3 854 895 sowie der deutschen Offenlegungsschrift 22 01 278 zu entnehmen. Die Verfahrensvarianten mit Abzug flüssiger Schlacke ist in den britischen Patentschriften 1 507 505, 1 508 671 und 1 512 677 erläutert.

Die Vergasung feinkörniger fester Brennstoffe im Wirbelbett kennt man aus der deutschen Offenlegungsschrift 26 11 191 und dem dazu korrespondierenden US-Patent 4 026 679 sowie den US-Patenten 2 662 816 und 4 077 778. Die Kohlevergasung in der zirkulierenden Wirbelschicht ist im US-Patent 4 032 305 ausführlich dargestellt.

Der Erfindung liegt die Aufgabe zugrunde, die Vergasung im Festbett und im Wirbelbett auf günstige Weise zu koppeln. Dadurch wird es möglich, die bei der Gewinnung mit sehr breitem Kornspektrum anfallenden festen Brennstoffe, insbesondere Kohle, vollständig und ohne Agglomerierung des Feinkorns zu vergasen. Erfindungsgemäß wird dies dadurch erreicht, daß man das Produktgas der Wirbelschichtvergasung, das eine Temperatur von 700-1 200 °C aufweist, indirekt mit Wasser kühlt und dabei Wasserdampf erzeugt, den man als Vergasungsmittel in die Festbettvergasung leitet. Durch Überhitzung wird dafür gesorgt, daß der Wasserdampf mit der nötigen Temperatur in die Festbettvergasung strömt.

Es ist vorteilhaft, das Produktgas der Festbettvergasung indirekt mit Wasser zu kühlen und den gebildeten Wasserdampf mindestens teilweise als Vergasungsmittel in die Wirbelschichtvergasung zu leiten.

Bevorzugt vergast man die feinkörnigen festen Brennstoffe in der zirkulierenden Wirbelschicht, in der höhere Durchsätze als im konventionellen Wirbelbett erreicht werden. In der zirkulierenden Wirbelschicht herrschen dabei Drücke von 1-100 bar, vorzugsweise 1-30 bar, und das Produktgas weist eine Temperatur von 800-1 100 °C auf.

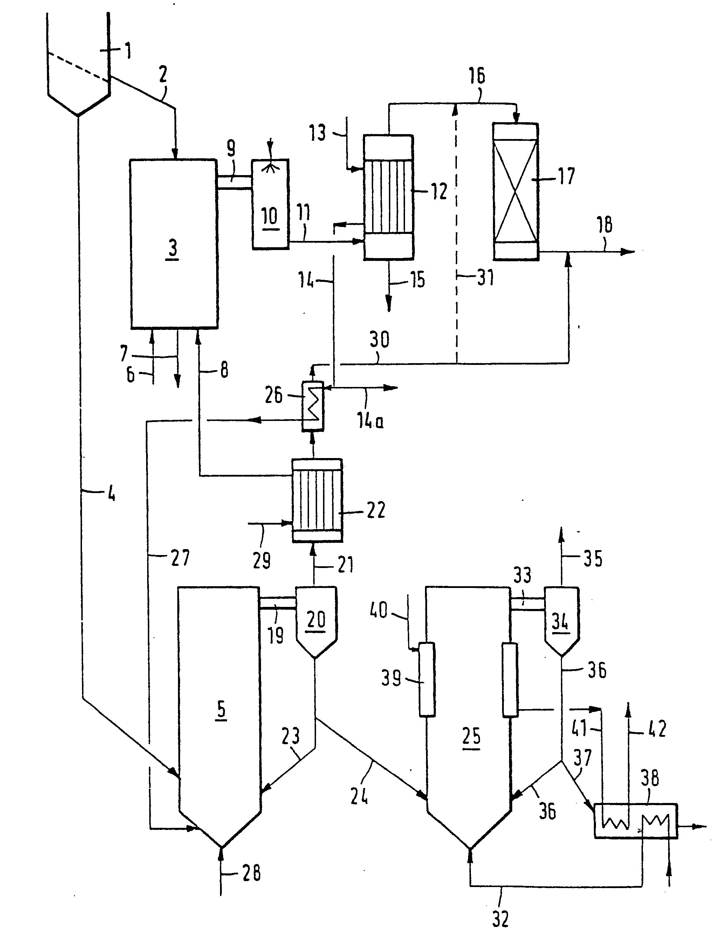

Ausgestaltungsmöglichkeiten des Verfahrens werden mit Hilfe der Zeichnung erläutert.

Kohle mit breitem Kornspektrum bis etwa 70 mm wird zunächst der Klassiervorrichtung 1 zugeführt, wo das Grobkorn mit unterer Korngrenze bevorzugt von 2-5mm abgetrennt und durch die Leitung 2 zur Festbettvergasung 3 geführt wird. Der feinkörnige Rest der Kohle gelangt durch die Leitung 4 zur Wirbelschichtvergasung 5. Falls nötig, kann die Kohle der Leitung 4 noch einer Mahlung und/oder Trocknung unterzogen werden.

Die Vergasung im Festbett wird in an sich bekannter Weise durchgeführt, wobei man durch die Leitung 6 Sauerstoff oder sauerstoffreiches Gas zuführt und durch die Leitung 7 Schlacke oder Asche entfernt. Wasserdampf als weiteres Vergasungsmittel wird durch die Leitung 8 zugeführt.

Das Produktgas der Vergasung 3 gelangt durch den Kanal 9 in einen Waschkühler 10, wo es mit einer überweigend aus Wasser bestehenden Flüssigkeit besprüht und dabei auf Temperaturen von etwa 150-220 °C gekühlt wird. Das gekühlte Produktgas strömt durch die Leitung 11 zu einem Abhitzekessel 12 und wird dort indirekt mit Speisewasser aus der Leitung 13 gekühlt. Der erzeugte Wasserdampf verläßt den Abhitzekessel 12 durch die Leitung 14, und wasserhaltiges Kondensat wird durch die Leitung 15 der an sich bekannten Weiterbehandlung zugeführt.

Will man das Produktgas als Synthesegas benutzen, so gibt man es in der Leitung 16 einer katalytischen Konvertierung auf, wo $H_2O + CO$ mindestens zum Teil zu $H_2$ und $CO_2$ umgewandelt werden. Rohes Synthesegas verläßt die Konvertierung durch die Leitung 18 und wird z. B. einer weiteren Kühlung und Feinreinigung zugeführt.

Die Wirbelschichtvergasung 5 arbeitet nach dem Prinzip der zirkulierenden Wirbelschicht, bei welcher Feststoffe und Produktgas durch einen Kanal 19 zu einem Separator 20, der als Zyklonseparator ausgebildet sein kann, geführt werden. Das heiße Produktgas, das Temperaturen von 800-1 100 °C aufweist, strömt in der Leitung 21 zu einem indirekten Wärmeaustauscher 22. Ein Teil der im Separator 20 abgeschiedenen Feststoffe wird durch die Leitung 23 zurück zur Vergasung geleitet und der Rest der Feststoffe gelangt durch die Leitung 24 zur Verbrennung 25.

Der für die Vergasung 5 benötigte Wasserdampf kommt aus der Leitung 14, wird im Wärmeaustauscher 26 auf Temperaturen von etwa 200-350 °C überhitzt und in der Leitung 27 dem unteren Bereich der Vergasung 5 zugeleitet. Sauerstoff oder sauerstoffreiches Gas wird durch die Leitung 28 zugeführt. Überschüssiger Wasserdampf wird in der Leitung 14a abgezogen.

Im Wärmeaustauscher 22 wird das heiße Produktgas aus der Vergasung 5 indirekt mittels Wasserkühlung gekühlt, wobei Speisewasser in der Leitung 29 herangeführt wird. Der Wärmeaustauscher 22 kann mehrstufig ausgebildet sein, er erzeugt überhitzten Wasserdampf mit Temperaturen von

0 075 972

etwa 300-600 °C und vorzugsweise etwa 400-500 °C, der in der Leitung 8 der Festbettvergasung 3 zugeführt wird. Eine weitere Kühlung des Produktgases erfolgt im Wärmeaustauscher 26, wobei die abgeführte Wärme der Überhitzung des aus der Leitung 14 kommenden Wasserdampfs dient.

Das gekühlte Produktgas aus der Vergasung 5 verläßt den Wärmeaustauscher 26 durch die Leitung 30 und wird dem Produktgas der Leitung 18 zugemischt. Wie durch die gestrichelte Leitung 31 angedeutet, kann man das Produktgas der Leitung 30 ganz oder teilweise auch dem Gas in der Leitung 16 zumischen, falls man der Konvertierung 17 ein Gas mit einem höheren CO-Gehalt aufgeben will.

Kohlenstoffhaltiger Vergasungsrückstand aus der Leitung 24 wird im Reaktor 25 mittels Luft aus der Leitung 32 verbrannt. Im vorliegenden Fall arbeitet die Verbrennung 25 ebenfalls nach dem Prinzip der zirkulierenden Wirbelschicht, wobei Gas und Feststoffe durch den Kanal 33 zum Separator 34 strömen. Das Verbrennungsgas der Leitung 35 bedarf keiner Entschwefelung mehr, bevor es in die Atmosphäre geleitet wird, weil der Schwefelgehalt der Brennstoffe aus der Leitung 4 bereits in das Produktgas der Vergasung 5 übergegangen ist. Ein Teil der im Separator 34 abgeschiedenen Feststoffe fließt durch die Leitung 36 zurück zur Verbrennungszone und der Rest gelangt durch die Leitung 37 zu einem Feststoffkühler 38.

Die Verbrennung 25 weist einen eingebauten Dampferzeuger 39 auf, dem man Speisewasser durch die Leitung 40 zuführt. Der gebildete Wasserdampf strömt in der Leitung 41 zum Feststoffkühler 38, wo er überhitzt wird. Dieser überhitzte Wasserdampf steht in der Leitung 42 zur Verfügung und kann z. B. als Vergasungsmittel in der Festbettvergasung 3 und/oder der Wirbelschichtvergasung 5 verwendet werden. Falls der Wasserdampf für diesen Zweck nicht benötigt wird, kann er auch z. B. zum Erzeugen elektrischer Energie genutzt werden. Die Verbrennungsluft der Leitung 32 wird ebenfalls im Feststoffkühler 38 erhitzt.

Beispiel

In einer der Zeichnung entsprechenden Versuchsanlage werden 1 000 kg Steinkohle vergast. Die Kohle hat folgende Zusammensetzung :

Asche    : 20  Gew.%
Feuchte : 10  Gew.%
C         : 78,6 Gew.%
H         :  4,7 Gew.%
O         : 13,5 Gew.%
N         :  2,2 Gew.%
S         :  1,0 Gew.%

600 kg der Kohle haben eine Korngröße von mindestens 3 mm und werden der Festbettvergasung 3 aufgegeben, der feinkörnige Rest wird der Vergasung in der zirkulierenden Wirbelschicht 5 zugeführt. Die Festbettvergasung wird in einem bekannten Lurgi-Gaserzeuger mit Drehrost und Abzug fester Asche durchgeführt.

Die Vergasung erfolgt in beiden Fällen mit einem Wasserdampf-Sauerstoff-Gemisch, im Festbett bei 27 bar und in der zirkulierenden Wirbelschicht bei 1 bar. Das Wasserdampf-Sauerstoff-Verhältnis beträgt 4,0 $kg/Nm^3$ in der Festbettvergasung und 1,2 $kg/Nm^3$ in der Wirbelschicht 5. Es werden folgende Gasmengen der dargestellten Qualität erzeugt :

|  | Festbettvergasung | Wirbelschichtvergasung |
| --- | --- | --- |
| Gasmenge | 1 332,1 $Nm^3$ | 559,2 $Nm^3$ |
| Temperatur | 464   °C | 1 095   °C |
| Zusammensetzung : |  |  |
| $H_2$ | 39,8 Vol.% | 39,0 Vol.% |
| CO | 21,7 Vol.% | 39,3 Vol.% |
| $CH_4$ | 9,3 Vol.% | 1,6 Vol.% |
| $C_nH_m$ | 0,5 Vol.% | — |
| $CO_2$ | 28,0 Vol.% | 17,9 Vol.% |
| $H_2S$ | 0,3 Vol.% | 0,5 Vol.% |
| $N_2$ + Ar | 0,4 Vol.% | 1,7 Vol.% |
|  | 100,0 Vol.% | 100,0 Vol.% |

Der Kohleumsatz im Wirbelbett 5 beträgt knapp 60 %, so daß etwa 134 kg Koks in die Wirbelschichtverbrennung 25 überführt werden. Neben den zuvor genannten Komponenten enthält das Rohgas der Festbettvergasung noch Ammoniak und Kohlenoxysulfid sowie Teer, Öl, Naphtha, Phenole und Fettsäuren, die hier nicht weiter betrachtet werden sollen.

3

Im Abhitzekessel 12 werden 462 kg Sattdampf von 6 bar erzeugt und in der Leitung 14 abgezogen. 172 kg dieses Wasserdampfes werden nach Überhitzung auf 250 °C im Wärmeaustauscher 26 in der Leitung 27 der Vergasung in der Wirbelschicht zugeführt. Im Wärmeaustauscher 22 werden 1 565 kg Sattdampf von 40 bar erzeugt, wovon 1 030 kg nach Überhitzung auf 380 °C als Vergasungsdampf durch die Leitung 8 in die Festbettvergasung 3 gegeben werden.

Die restlichen Mengen an Wasserdampf sowie auch gasförmige und flüssige Nebenprodukte werden zu Antriebszwecken verwendet. Dabei entstehen noch ca. 140 kWh an elektrischer Energie.

Aus den genannten Gasmengen lassen sich in an sich bekannter Weise 619 kg Reinmethanol erzeugen. Im Vergleich hierzu beträgt die Methanolerzeugung nur etwa 80 % dieses Wertes, wenn die Vergasung des Grobkorns wie oben beschrieben im Festbettreaktor erfolgt und das Feinkorn nicht vergast, sondern verbrannt und zur Energieerzeugung genutzt wird. Dabei fallen etwa 740 kWh an elektrischer Energie an.

## Ansprüche

1. Verfahren zum Vergasen fester Brennstoffe mit Sauerstoff, Wasserdampf und/oder Kohlendioxid enthaltenden Vergasungsmitteln, wobei man grobkörnige feste Brennstoffe mit Korngrößen von mindestens 2 mm unter einem Druck von 5-150 bar im Festbett vergast, das sich langsam nach unten bewegt, in das die Vergasungsmittel von unten eingeleitet und unter dem die unverbrennlichen mineralischen Bestandteile als feste Asche oder flüssige Schlacke abgezogen werden, und wobei man feinkörnige feste Brennstoffe in der Wirbelschicht unter einem Druck von 1-100 bar vergast, dadurch gekennzeichnet, daß man das Produktgas der Wirbelschichtvergasung, das eine Temperatur von 700-1 200 °C aufweist, indirekt mit Wasser kühlt und dabei Wasserdampf erzeugt, den man als Vergasungsmittel in die Festbettvergasung leitet.

2. Verfahren nach Anspruch 1, dadurch gekennzeichnet, daß man das Produktgas der Festbettvergasung indirekt mit Wasser kühlt und dabei Wasserdampf erzeugt, den man mindestens teilweise als Vergasungsmittel in die Wirbelschichtvergasung leitet.

3. Verfahren nach Anspruch 1 oder 2, dadurch gekennzeichnet, daß die feinkörnigen festen Brennstoffe in der zirkulierenden Wirbelschicht unter einem Druck von 1-100 bar, vorzugsweise 1-30 bar, vergast werden und das die zirkulierende Wirbelschicht verlassende Produktgas eine Temperatur von 800-1100 °C aufweist.

4. Verfahren nach Anspruch 1 oder einem der folgenden, dadurch gekennzeichnet, daß der als Vergasungsmittel in die Festbettvergasung geleitete Wasserdampf eine Temperatur von etwa 300-600 °C und vorzugsweise von etwa 400-500 °C aufweist.

5. Verfahren nach Anspruch 2 oder einem der folgenden, dadurch gekennzeichnet, daß der als Vergasungsmittel in die Wirbelschichtvergasung geleitete Wasserdampf eine Temperatur von etwa 200-350 °C aufweist.

6. Verfahren nach Anspruch 2 oder 5, dadurch gekennzeichnet, daß der durch indirekten Wärmeaustausch mit dem Produktgas der Festbettvergasung erzeugte Wasserdampf durch indirekten Wärmeaustausch mit dem Produktgas der Wirbelschichtvergasung überhitzt wird, bevor man ihn als Vergasungsmittel in die Wirbelschichtvergasung leitet.

## Claims

1. A process of gasifying solid fuels with gasifying agents that contain oxygen, water vapor and/or carbon dioxide, wherein coarse-grained solid fuels in particle sizes of at least 2 mm are gasified under a pressure of 5 to 150 bars in a fixed bed while said bed is slightly descending, the gasifying agents are introduced into the fixed bed rom below and the incombustible mineral constituents are withdrawn from the lower end of the fixed bed as solid ash or liquid slag, and whereas fine-grained solid fuels are gasified in a fluidized bed under a pressure of 1 to 100 bars, characterized in that the product gas formed in the fluidized-bed gasification and having a temperature of 700 to 1 200 °C is indirectly cooled with water to produce steam, which is then supplied as a gasifying agent to the fixedbed gasification.

2. A process according to claim 1, characterized in that the product gas from the fixed-bed gasification indirectly cooled with water and at least part of the resulting steam is supplied as a gasifying agent to the fluidized-bed gasification.

3. A process according to claim 1 or 2, characterized in that the fine-grained solid fuels are gasified in the circulating fluidized bed under a pressure of 1 to 100 bars, preferably 1 to 30 bars, and the product gas leaving the circulating fluidized bed has a temperature of 800 to 1 100 °C.

4. A process according to claim 1 or any of the following claims, charachterized in that the steam supplied as gasifying agent to the fixed-bed gasification has a temperature of about 300 to 600 °C, preferably about 400 to 500 °C.

5. A process according to claim 2 or any of the following claims, characterized in that the steam supplied as gasifying agent to the fluidized-bed gasification has a temperature of about 200 to 350 °C.

4

# 0 075 972

6. A process according to claim 2 or 5, characterized in that the steam generated by an indirect heat exchange with the product gas from the fixed-bed gasification superheated by an indirect heat exchange with the product gas from the fluidized-bed gasification and is subsequently supplied as a gasifying agent to the fluidized-bed gasification.

**Revendications**

1. Procédé de gazéification de combustibles solides, par des agents de gazéification contenant de l'oxygène, de la vapeur d'eau et/ou du dioxyde de carbone, en gazéifiant des combustibles solides de granulométrie grossière ayant une granulométrie d'au moins 2 mm, sous une pression de 5 à 150 bar en lit fixe qui se déplace lentement vers le bas et dans lequel les agents de gazéification sont introduits par le bas et sous lequel les constituants minéraux non combustibles sont soutirés sous forme de cendres solides ou de scories liquides et en gazéifiant des combustibles solides à grains fins dans le lit fluidisé, sous une pression de 1 à 100 bars, caractérisé en ce qu'il consiste à refroidir indirectement par de l'eau le gaz produit par la gazéification en lit fluidisé, et ayant une température de 700 à 1 200 °C, et à produire ainsi de la vapeur d'eau que l'on envoie à la gazéification en lit fixe à titre d'agent de gazéification.

2. Procédé suivant la revendication 1, caractérisé en ce qu'il consiste à refroidir indirectement par de l'eau le gaz produit dans la gazéification en lit fixe, et à obtenir ainsi de la vapeur d'eau que l'on envoie au moins partiellement à la gazéification en lit fluidisé, à titre d'agent de gazéification.

3. Procédé suivant la revendication 1 ou 2, caractérisé en ce qu'il consiste à gazéifier les combustibles solides à grains fins dans le lit fluidisé circulant sous une pression de 1 à 100 bar et, de préférence, de 1 à 30 bar, le gaz produit qui quitte le lit fluidisé en circulation ayant une température de 800 à 1 100 °C.

4. Procédé suivant la revendication 1 ou l'une des revendications suivantes, caractérisé en ce que la vapeur d'eau envoyée à la gazéification en lit fixe, à titre d'agent de gazéification, a une température de 300 à 600 °C environ et, de préférence, de 400 à 500 °C environ.

5. Procédé suivant la revendication 2 ou l'une des revendications suivantes, caractérisé en ce que la vapeur d'eau envoyée à la gazéification en lit fluidisé, à titre d'agent de gazéification, a une température de 200 à 350 °C environ.

6. Procédé suivant la revendication 2 ou 5, caractérisé en ce qu'il consiste à surchauffer la vapeur d'eau produite par échange de chaleur indirecte avec le gaz produit dans la gazéification en lit fixe, par échange de chaleur indirecte avec le gaz produit dans la gazéification en lit fluidisé, avant de l'envoyer à la gazéification en lit fluidisé, à titre d'agent de gazéification.